# EUROPÄISCHE PATENTSCHRIFT

(11) **EP 2 881 233 B1**
(45) Veröffentlichungstag und Bekanntmachung des Hinweises auf die Patenterteilung: **11.10.2017**
(21) Anmeldenummer: 14195804.1
(22) Anmeldetag: 02.12.2014
(51) Int. Cl.: B29C 49/46, B29C 49/48, B29C 49/06, B29C 49/12, B29C 49/36, B29C 49/28

(54) **Blasformmaschine mit erwärmbarer Kühlmittelzuführung und Verfahren**
Blow-moulding machine with heatable coolant feed line and related process
Machine de formage par soufflage dotée d'une alimentation en liquide de refroidissement pouvant être chauffée et procédé correspondant

(30) Priorität: 02.12.2013 DE 102013113335
(43) Veröffentlichungstag der Anmeldung: 10.06.2015
(73) Patentinhaber: Krones AG, 93073 Neutraubling (DE)
(72) Erfinder: Brunner, Andreas, 93073 Neutraubling (DE); Höllriegl, Thomas, 93073 Neutraubling (DE)
(74) Vertreter: Bittner, Bernhard

(56) Entgegenhaltungen:
- DE-A1-102011 080 833
- DE-A1-102012 104 267
- US-A1- 2012 248 659

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und entsprechende Verfahren sind aus dem Stand der Technik seit langem bekannt. Dabei werden üblicherweise erwärmte Kunststoffvorformlinge Blasstationen zugeführt und dort mittels Druckluft zu Kunststoffflaschen expandiert. Diese Umformungsstationen sind auch üblicherweise an einem beweglichen Träger angeordnet.

In jüngerer Zeit sind auch sogenannte sterile Blasformmaschinen bekannt geworden. Dabei werden die Kunststoffvorformlinge während ihrer Expansion durch einen Reinraum transportiert. Auf diese Weise ist es möglich, die Herstellung steriler bzw. steril abzufüllender Getränke zu erleichtern. Um jedoch derartige Reinräume aufrecht zu erhalten, ist es von Zeit zu Zeit erforderlich, Bauteile der Anlage, insbesondere auch Elemente dieser einzelnen Umformungsstationen zu sterilisieren. Dabei werden die Bauteile und insbesondere deren Oberflächen mit einem Sterilisationsmedium sterilisiert, insbesondere aber nicht ausschließlich mit (insbesondere erwärmten) Wasserstoffperoxidgas (H₂O₂) oder Peressigsäure.

Um ein Kondensieren dieses Sterilisationsmittels, insbesondere H₂O₂ zu verhindern, muss dabei eine bestimmte Oberflächentemperatur der zu sterilisierenden Bauteile erreicht bzw. aufrecht erhalten werden. Diese Temperatur liegt dabei bei einer Größenordnung von 50°. Im Stand der Technik werden zu diesem Zwecke die Reinräume sowie auch die Formträger der Umformungsstationen mit heißer Luft erwärmt, welche durch eine Lüftungstechnik der Maschine zugeführt wird.
Bei dieser Vorgehensweise hat sich jedoch herausgestellt, dass durch die sehr große Masse der Formträger und auch die geringe Wärmekapazität von Luft das Aufheizen sehr lange dauert. Falls ein Zwischensterilisieren erforderlich ist, bei dem nur die Blasformmaschine sterilisiert wird, führt dies zu einem hohen Produktionsausfall, der von Kunden nicht hingenommen wird.
Der vorliegenden Erfindung liegt daher die Aufgabe zugrunde, eine Vorrichtung und ein Verfahren zur Verfügung zu stellen, welche insbesondere bei sterilen Anwendungen von Blasformmaschinen hohe Produktionsausfälle vermeiden, falls eine Sterilisation der Anlage bzw. Teilen der Anlagen erforderlich ist. Dies wird erfindungsgemäß durch eine Vorrichtung nach Anspruch 1 und ein Verfahren nach Anspruch 10 erreicht.

Vorrichtungen und Verfahren der eingangsgenannte Art sind in den Druckschriften DE10-2011-080833 und US2012/0248659 beschriebene.

Eine erfindungsgemäße Vorrichtung zum Umformen von Kunststoffvorformlingen zu Kunststoffbehältnissen weist wenigstens eine Umformungsstation auf, welche wiederum eine Blasformeinrichtung aufweist, welche einen Hohlraum ausbildet, innerhalb dessen die Kunststoffvorformlinge durch Beaufschlagung mit einem gasförmigen Medium zu den Kunststoffbehältnissen umformbar sind. Dabei ist die Blasformeinrichtung mehrteilig ausgebildet und weist wenigstens ein erstes Blasformteil und ein zweites Blasformteil auf und die Umformungsstation weist eine Blasformträgereinrichtung zum Halten der Blasformteile auf. Die Blasformträgereinrichtung weist dabei ein erstes Trägerteil und ein zweites Trägerteil auf, welche bezüglich einander zum Öffnen und Schließen der Blasformeinrichtung beweglich sind. Weiterhin ist wenigstens ein Kühlmittelkanal vorgesehen, der zum Leiten eines fließfähigen Kühlmittels zum Kühlen der Blasformeinrichtung und/oder der Blasformträgereinrichtung dient. Dabei ist dieser Kühlmittelkanal in einen Kühlkreislauf eingebunden. Insbesondere weist die Vorrichtung einen Reinraum auf, innerhalb dessen die Kunststoffvorformlinge während ihrer Umformung transportiert werden.
Erfindungsgemäß weist der Kühlkreislauf wenigstens ein zuschaltbares Heizelement zum Erwärmen des fließfähigen Kühlmediums auf. Alternativ oder zusätzlich wäre es auch möglich, dass ein Erwärmungskreislauf vorgesehen ist, der insbesondere zum Erwärmen der Umformungsstation als Vorbereitung für einen Sterilisationsvorgang dient.

Bereits aus dem Stand der Technik ist es bekannt, dass einzelne Bereiche der Blasformeinrichtung während des Betriebs gekühlt oder allgemein temperiert werden. Zu diesem Zwecke sind Kühlmittelkanäle vorgesehen, welche beispielsweise Blasformträgerteile durchdringen. Im Rahmen der Erfindung wird vorgeschlagen, diese Kühlmittelkanäle auch für eine Erwärmung von Innenoberflächen der Vorrichtung zu nutzen, insbesondere zu dem Zweck, dass eine Sterilisation besser bzw. schneller durchgeführt werden kann.

In diesem Zusammenhang wird darauf hingewiesen, dass die die Bauteile bzw. wesentliche Bauteile der Blasformeinrichtung, wie beispielsweise die Blasformträger aber auch die Blasformen jeweils sehr hohe Massen aufweisen und daher eine relativ lange Aufwärmzeit bzw. Aufheizzeit benötigen. Daneben kann die Vorrichtung auch eine Temperaturerfassungseinrichtung aufweisen, welche eine Temperatur wenigstens eines Bauteils der Blasformeinrichtung, insbesondere während dessen Erwärmung, erfasst. Auch auf Basis einer derartigen Temperaturerfassung kann die Aufheizung des Blasformteils gesteuert werden. Daneben kann die Vorrichtung auch eine weitere Temperaturerfassungseinrichtung aufweisen, welche weitere Temperaturen, wie etwa eine Umgebungstemperatur der Vorrichtung erfasst. Auch derartige Messwerte können bei der Aufheizung der Bauteile berücksichtigt werden.

Vorteilhaft ist das zuschaltbare Heizelement derart ausgestaltet, dass es eine Temperierung der Blasformeinrichtung und/oder der Blasformträgereinrichtung bzw. einer Oberfläche der Blasformeinrichtung und/oder der Blasformträgereinrichtung (und insbesondere die Außenoberflächen dieser Einrichtungen) auf wenigstens 50° C ermöglicht.

Dabei wäre es möglich, dass das besagte Heizelement ständig von dem Kühlmedium durch-bzw. umflossen wird, jedoch nur für die Vorbereitung eines Sterilisationsvorgangs das Heizelement zugeschaltet (z.B. durch elektrische Bestromung) wird. Es wäre jedoch auch denkbar, dass das Heizelement in einem normalen Arbeitsbetrieb der Vorrichtung nicht von der Kühlflüssigkeit durch bzw. umströmt wird, jedoch der Kühlmittelstrom (beispielsweise durch entsprechende Beschaltung mit Ventilen derart umleitbar ist, dass die Flüssigkeit, insbesondere zur Vorbereitung eines Sterilisationsvorgangs mit dem Heizelement in Kontakt kommt um so erwärmt zu werden.

Bei einer weiteren vorteilhaften Ausführungsform weist die Vorrichtung bzw. die wenigstens eine Umformungsstation eine Reckstange auf, welche in das Innere der Behältnisse einführbar ist. Mittels dieser Reckstange können die Behältnisse in ihrer Längsrichtung gedehnt werden.

Bei einer weiteren vorteilhaften Ausführungsform weist die Vorrichtung eine Beaufschlagungseinrichtung auf, um die Kunststoffvorformlinge zu deren Umformung mit einem fließfähigen und insbesondere mit einem gasförmigen Medium, beispielsweise mit Druckluft (und insbesondere mit steriler Druckluft) zu beaufschlagen. Hierbei kann es sich um eine sog. Blasdüse handeln, welche insbesondere an einen Mündungsbereich des Kunststoffvorformlings anlegbar ist, um diesen, bzw. dessen Innenraum zu beaufschlagen.

Bei einer weiteren vorteilhaften Ausführungsform weist die Umformungsstation auch ein Bodenteil auf, welches zur Ausformung eines Bodens des herzustellenden Behältnisses dient. Auch dieses Bodenteil ist dabei bevorzugt an einer Trägereinrichtung angeordnet. Es wäre auch möglich, dass auch in diesem Bodenteil ein Kühlmittelkanal angeordnet ist, durch den das oben besagte Kühlmittel strömen kann.

Bevorzugt erfolgt im Arbeitsbetrieb eine Kühlung der jeweiligen Blasformträgerteile und mit diesen bevorzugt auch eine Kühlung der Blasformteile. Auch wäre es möglich, dass die Blasformteile selbst entsprechend Kanäle aufweisen, durch welche hindurch ein Temperiermedium und insbesondere eine Kühlflüssigkeit strömen kann.

Bei einer weiteren Ausführungsform weist die Vorrichtung auch wenigstens eine Kühleinrichtung zum Kühlen der Kühlflüssigkeit auf. Dabei ist es möglich, dass eine stationäre Kühleinrichtung vorgesehen ist. Es wäre jedoch auch möglich, dass die Kühlflüssigkeit direkt einem Wasserversorgungsnetz entnommen wird, da unter Umständen dieses Kühlwasser bereits eine geeignete Temperatur aufweist.

Bei einer weiteren vorteilhaften Ausführungsform kann eine Temperiereinrichtung vorgesehen sein, welche zum Temperieren der Blasformeinrichtung und/oder der Blasformträgereinrichtung dient. Diese Temperiereinrichtung kann neben dem oben erwähnten Heizelement auch eine Steuerungseinrichtung aufweisen, daneben auch eine Pumpe und/oder eine Kühlwasserversorgung. Daneben kann der besagte Kühlkreislauf auch Verbindungsleitungen aufweisen, um das Kühlmedium den einzelnen Umformungsstationen zuzuführen. Bei einer weiteren vorteilhaften Ausführungsform ist eine Steuereinrichtung des Kühlkreislaufes in eine Maschinensteuerung der gesamten Vorrichtung integriert. Bei einer weiteren vorteilhaften Ausführungsform ist das Heizelement und/oder die Steuereinrichtung derart ausgestaltet, dass das Kühlmittel zumindest zeitweise derart gesteuert wird, dass die Bildung von Kondenswasser reduziert und bevorzugt vermieden werden kann.

Bei einer weiteren vorteilhaften Ausführungsform weist die Vorrichtung einen drehbaren Träger auf, an dem eine Vielzahl von Umformungsstationen angeordnet ist. In diesem Falle ist es möglich, dass jede einzelne dieser Umformungsstationen mit dem besagten Kühlmittel versorgt wird und/oder insbesondere zur Vorbereitung eines Sterilisationsbetriebes auch mit dem erwärmten Kühlmittel versorgt werden kann.

Bei einer weiteren vorteilhaften Ausführungsform ist das wenigstens eine Heizelement an dem besagten Träger angeordnet. Auf diese Weise ist eine unmittelbare Erwärmung der Kühlflüssigkeit letztlich zum Zwecke der Sterilisation möglich. Bevorzugt jedoch ist das Heizelement bzw. die Heizeinrichtung stationär angeordnet. Dabei ist bevorzugt das Heizelement in der Strömungsrichtung der Kühlflüssigkeit direkt vor einem Drehverteiler angeordnet, der die Flüssigkeit auf die einzelnen Umformungsstationen verteilt. Auch wäre es möglich, mehrere derartige Heizeinrichtungen hintereinander anzuordnen. Weiterhin wäre es auch möglich, dass es sich bei dem Heizelement um ein sog. Peltier-Element handelt, welches je nach Beschaltung kühlen oder wärmen kann. Dieses Peltier-Element kann im Normalbetrieb der Vorrichtung ebenfalls zur (weiteren Kühlung) der Flüssigkeit eingesetzt werden. Bei der Kühlflüssigkeit kann es sich insbesondere aber nicht ausschließlich um Wasser handeln.

Allgemein wird erfindungsgemäß vorgeschlagen, dass das Heizmittel in den Kühlkreislauf des jeweiligen Formträgers bzw. der Blasformträgereinrichtung integriert wird. In einem normalen Arbeitsbetrieb ist dabei vorteilhaft dieses Heizelement abgeschaltet und das Kühlwasser bzw. die Kühlflüssigkeit wird mit einer vorgegebenen Temperatur, beispielsweise 10°, in die Blasformträgereinrichtungen geleitet. Während eines Sterilisationsvorganges und/oder vor dem Sterilisationsvorgang wird diese Versorgung mit Kaltflüssigkeit bzw. Kaltwasser unterbrochen und/oder mithilfe des Heizelementes die Temperatur der Kühlflüssigkeit entsprechend angehoben. Durch eine Temperierung dieser Kühlflüssigkeit auf beispielsweise 50° kann der Formträger schnell auf eine vorgegebene Temperatur gebracht werden, so dass insgesamt die Aufheizphase erheblich verkürzt werden kann. Insbesondere kann durch die erfindungsgemäße Vorrichtung die Aufheizphase um bevorzugt die Hälfte der Zeit, besonders bevorzugt um zwei Drittel der Zeit im Vergleich zur bisherig (wie im Stand der Technik beschriebenen) Zeit verringert werden.

Bei einer weiteren vorteilhaften Ausführungsform sind mehrere Heizelemente vorgesehen. Dabei ist es denkbar, dass jeder Umformungsstation wenigstens ein Heizelement zugeordnet ist, wodurch eine sehr schnelle Erwärmung der Kühlflüssigkeit möglich ist. Es wäre jedoch auch möglich, dass ein zentrales Heizelement vorgesehen ist, beispielsweise an dem drehbaren Träger angeordnet, welches die einzelnen Umformungsstationen versorgt. Auch wäre es möglich, dass eine stationäre Heizeinrichtung vorgesehen ist, welche ebenfalls zentral sämtliche Umformungsstationen mit der nunmehr erwärmten Flüssigkeit versorgt bzw. welche die Flüssigkeit erwärmt.

Bei einer weiteren möglichen Ausführungsform ist jedoch jeder Umformungsstation wenigstens ein Heizelement zugeordnet. Auch wäre es möglich, dass ein Heizelement mehreren Umformungsstationen zugeordnet ist.

Bei einer weiteren vorteilhaften Ausführungsform ist das wenigstens eine Heizelement ein elektrisch betriebenes Heizelement. Auf diese Weise kann sehr schnell eine effiziente Aufheizung der Kühlflüssigkeit erreicht werden. Es wäre jedoch auch möglich, dass es sich bei dem Heizelement um einen Wärmetauscher handelt, der von zentralen Erzeugungsanlagen mit Heißwasser oder Dampf versorgt wird. Auch die Nutzung von Abwärme aus anderen Prozessen ist denkbar.

Bei einer weiteren vorteilhaften Ausführungsform ist das Heizelement als Heizstab ausgebildet, der in den betreffenden Kühlkreislauf integriert ist. Dieser Heizstab ist dabei -wie oben erwähnt - bevorzugt zuschaltbar. Bei einer weiteren vorteilhaften Ausführungsform ist das wenigstens eine Heizelement in einer Strömungsrichtung des Kühlmittels in Serie mit dem Kühlmittelkanal angeordnet. Vorteilhaft ist dabei das Heizelement stromaufwärts bezüglich der jeweiligen Umformungsstation und bezüglich eines Kühlmittelstroms angeordnet, so dass eine sehr unmittelbare und effiziente Erwärmung möglich ist. Vorteilhaft ist das wenigstens eine Heizelement auch in einer Strömungsrichtung des fließfähigen Kühlmittels stromaufwärts bezüglich einer Verteileinrichtung und insbesondere eines Drehverteilers angeordnet, der das Kühlmittel auf die einzelnen Umformungsstationen verteilt.

Bei einer weiteren vorteilhaften Ausführungsform sind wenigstens Bereiche bzw. Elemente des Kühlmittelkreislaufes stationär angeordnet. So kann beispielsweise ein Kühlmittelreservoir vorgesehen sein, mittels dessen die einzelnen Umformungsstationen im Arbeitsbetrieb mit Kühlmittel versorgt werden. Vorteilhaft ist weiterhin eine Verteileinrichtung vorgesehen, welche das Kühlmittel auf die einzelnen Umformungsstationen aufteilt. Bei dieser Verteileinrichtung handelt es sich vorteilhaft um einen sogenannten Drehverteiler.

Bei einer weiteren vorteilhaften Ausführungsform weist die Vorrichtung wenigstens eine Beaufschlagungseinrichtung auf, um wenigstens einen Bereich der wenigstens einen Umformungsstation mit einem fließfähigen Sterilisationsmittel bzw. Sterilisationsmedium zu beaufschlagen. Bei dieser Beaufschlagungseinrichtung kann es sich beispielsweise um eine Düse handeln, welche bevorzugt stationär oder beweglich angeordnet ist. Es wäre jedoch auch möglich, dass als Beaufschlagungseinrichtung eine Blasdüse verwendet wird, welche im Arbeitsbetrieb die Kunststoffvorformlinge mit Blasluft beaufschlagt. In diesem Falle kann zum Zwecke der Reinigung diese Blasdüse auch zum Verteilen des Sterilisationsmediums eingesetzt werden.

Bevorzugt weisen die Blasformeinrichtungen eine innere Oberfläche auf, welche zumindest abschnittsweise eine negative Behältnisform des herzustellenden Behältnisses ausbildet. Weiterhin wäre es möglich, dass eine Kopplungseinrichtung vorgesehen ist, um Teile der Blasformwandung zum Ausbilden eines geschlossenen Zustands miteinander zu koppeln. Vorteilhaft ist dabei zumindest im Bereich eines Teils dieser Blasformwandung zumindest teilweise ein Temperierungsmittel vorgesehen, um die Blasform zu temperieren und insbesondere zu kühlen. Weiterhin wäre es auch möglich, dass das Heizelement als Heizspirale oder dergleichen ausgebildet ist.

Bei einer weiteren bevorzugten Ausführungsform weist die Vorrichtung einen Reinraum auf, innerhalb dessen die Kunststoffvorformlinge zu den Kunststoffbehältnissen expandierbar sind. Vorteilhaft erfolgt damit der Blasformvorgang innerhalb des besagten Reinraums. Dabei wäre es möglich, dass die vollständige Vorrichtung in diesen Reinraum integriert ist. Daneben wäre es auch möglich, dass eine komplette Anlage, beispielsweise einschließlich auch vor- und nachgeordneter Anlagenteile - in diesen Reinraum integriert ist.

Vorteilhaft ist jedoch der Reinraum kanalartig ausgebildet, genauer gesagt kanalartig um den Transportpfad der zu expandierenden Kunststoffvorformlinge.

Vorteilhaft ist auch wenigstens eine Dichtungseinrichtung vorgesehen, welche diesen Reinraum gegenüber einer (unsterilen) Umgebung abdichtet. Bei dieser Dichtungseinrichtung kann es sich dabei beispielsweise um ein sogenanntes Wasserschloss handeln. Dieses Wasserschloss kann dabei einen umlaufenden und von einer Flüssigkeit befüllten Kanal aufweisen, in dem ein Abschnitt einer weiteren Wandung, welche den Reinraum begrenzt, eintaucht.

Vorteilhaft weist damit die Vorrichtung wenigstens eine erste Wandung auf, welche den Reinraum begrenzt sowie wenigstens eine zweite Wandung, welche den Reinraum begrenzt, wobei die erste Wandung gegenüber der zweiten Wandung beweglich und insbesondere drehbar ausgestaltet ist.

Die vorliegende Erfindung ist weiterhin auf ein Verfahren zum Umformen von Kunststoffvorformlingen zu Kunststoffbehältnissen gerichtet, wobei die Kunststoffvorformlinge mittels einer Vielzahl von Umformungsstationen entlang eines vorgegebenen Transportpfades transportiert und während dieses Transports durch Beaufschlagung mit einem fließfähigen und insbesondere gasförmigen Medium zu den Kunststoffbehältnissen expandiert werden. Dabei weisen die Umformungsstationen jeweils Blasformeinrichtungen auf und diese Blasformeinrichtungen werden durch Verwendung eines Kühlmediums während eines Arbeitsbetriebes der Vorrichtung gekühlt.

Erfindungsgemäß wird dieses Temperiermedium und insbesondere Kühlmedium wenigstens zeitweise mittels einer zuschaltbaren Heizeinrichtung erwärmt.

Vorteilhaft wird dieses Temperiermedium zum Zwecke der Durchführung eines Sterilisationsvorganges erwärmt. Vorteilhaft wird im Rahmen des Sterilisiervorgangs wenigstens ein Element der Umformungsstation mit einem Sterilisationsmedium beaufschlagt.

Vorteilhaft wird dabei dieses Temperiermedium derart erwärmt, dass wenigstens ein von diesem Temperiermedium temperiertes Element der Blasformeinrichtung, wie beispielsweise eine Blasformträgereinrichtung, auf eine Temperatur von wenigstens 40°, bevorzugt von wenigstens 45° und besonders bevorzugt von wenigstens 50° erwärmt wird. Vorteilhaft wird dieses Temperiermedium und/oder das von diesem Temperiermedium durchströmte Element über einen Zeitraum hinweg erwärmt, der größer ist als 2 min, bevorzugt größer als 5 min, bevorzugt größer als 7min, bevorzugt größer als 10min und besonders bevorzugt größer als 15min.

Bei einer weiteren vorteilhaften Ausführungsform strömt das besagte Kühlmittel während eines Arbeitsbetriebes durch Elemente der Umformungsstationen und insbesondere der Blasformträgereinrichtungen. Bei einem weiteren bevorzugten Verfahren wird wenigstens zeitweise und bevorzugt vollständig während eines Arbeitsbetriebs der Vorrichtung ein Überdruck innerhalb des Reinraums gegenüber einem Umgebungsdruck aufrecht erhalten. Bevorzugt wird dieser Überdruck auch während eines Sterilisationsvorgangs aufrecht erhalten.

Bei einem weiteren bevorzugten Verfahren findet der Umformungsvorgang der Kunststoffvorformlinge zu den Kunststoffbehältnissen innerhalb eines Reinraumes statt. Vorteilhaft ist dabei dieser Reinraum mittels wenigstens einer Dichtungseinrichtung gegenüber einer (unsterilen) Umgebung abgedichtet.

Vorzugsweise werden während des Arbeitsbetriebs die einzelnen Blasformeinrichtungen der Vorrichtung durch Schwenkvorgänge von Blasformträgerteilen, an denen Blasformteile angeordnet ist, geöffnet und geschlossen.

Bei einem weiteren vorteilhaften Verfahren findet das Erwärmen des Kühlmittels und das Sterilisieren der Elemente der Umformungsstationen im Rahmen eines Zwischensterilisationsvorgangs statt. Insbesondere findet hierbei ein Zwischensterilisieren von Blasmaschinen innerhalb eines Reinraums statt. Ein derartiger Zwischensterilisationsvorgang kann beispielsweise durchgeführt werden, wenn die einzelnen Blasformeinrichtungen gewechselt werden, beispielsweise, wenn zwischen zwei unterschiedlichen zu fertigenden Behältnissen umgestellt werden soll. Daneben ist es jedoch auch denkbar, einen derartigen Zwischensterilisationsvorgang nach vorgegebenen Zeiträumen durchzuführen, um einen vorgegebenen Reinheitsgrad zu erreichen. Vorteilhaft wird jedoch zur Durchführung eines Zwischensterilisationsvorgangs die Produktion d.h. die Herstellung von Kunststoffbehältnissen unterbrochen.

Vorteilhaft werden daher Reinraumbedingungen wenigstens zeitweise während der Durchführung des (Zwischen)sterilisationsvorgangs aufrechterhalten. Vorteilhaft kann dabei zunächst eine Kühlung des Kühlmittels abgeschaltet und das Heizelement zugeschaltet werden. Weiterhin wäre es auch möglich, dass wenigstens einmal eine Temperatur der zu sterilisierenden Oberflächen gemessen wird, insbesondere bevor ein Sterilisationsmittel auf dies ausgebracht wird.

Vorteilhaft weist die oben beschriebene Vorrichtung eine Temperaturmesseinrichtung auf, welche insbesondere auch die Temperaturen der zu sterilisierenden Oberflächen bestimmt. Vorteilhaft kann dabei das beschriebene Heizelement auf Basis von mit dieser Temperaturmesseinrichtung gemessenen Temperaturen gesteuert werden. Dabei wäre es möglich, dass eine derartige Temperaturmesseinrichtung stationär angeordnet ist und während einer Drehbewegung des Trägers die Temperaturen der einzelnen Blasformteile (insbesondere berührungslos) bestimmt. Auch die Beaufschlagung der Oberflächen mit dem Sterilisationsmedium kann in Abhängigkeit von einer Temperatur der zu beaufschlagenden Oberflächen erfolgen.

Weitere Vorteile und Ausführungsformen ergeben sich aus den beigefügten Zeichnungen:

Darin zeigen:
- Fig. 1: eine schematische Darstellung einer Anlage zum Herstellen von Kunststoffbehältnissen;
- Fig. 2: eine Ansicht eines Reinraums im Bereich einer Blasstation; und
- Fig. 3: ein Diagramm einer erfindungsgemäßen Vorrichtung.

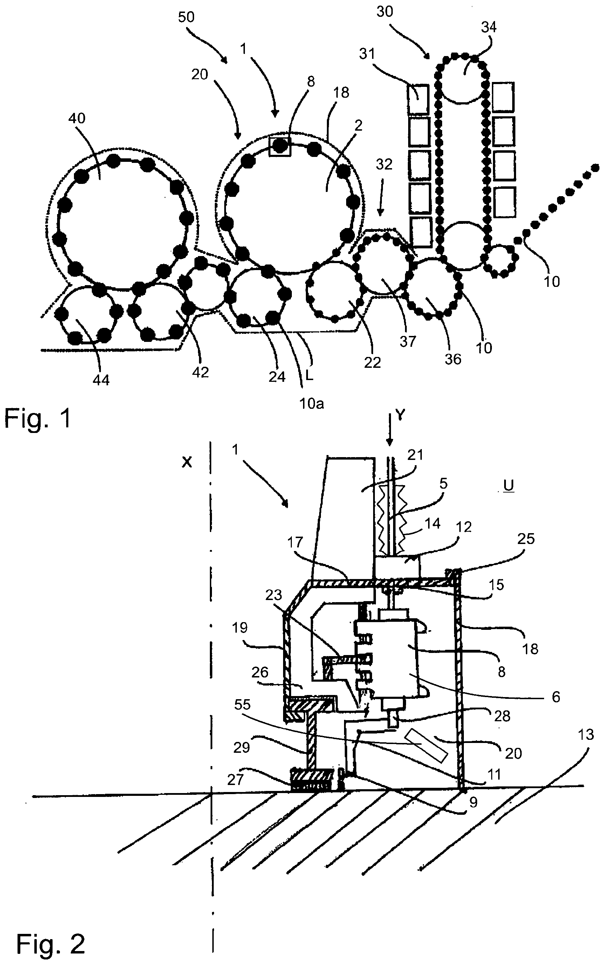

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich eine dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich der Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

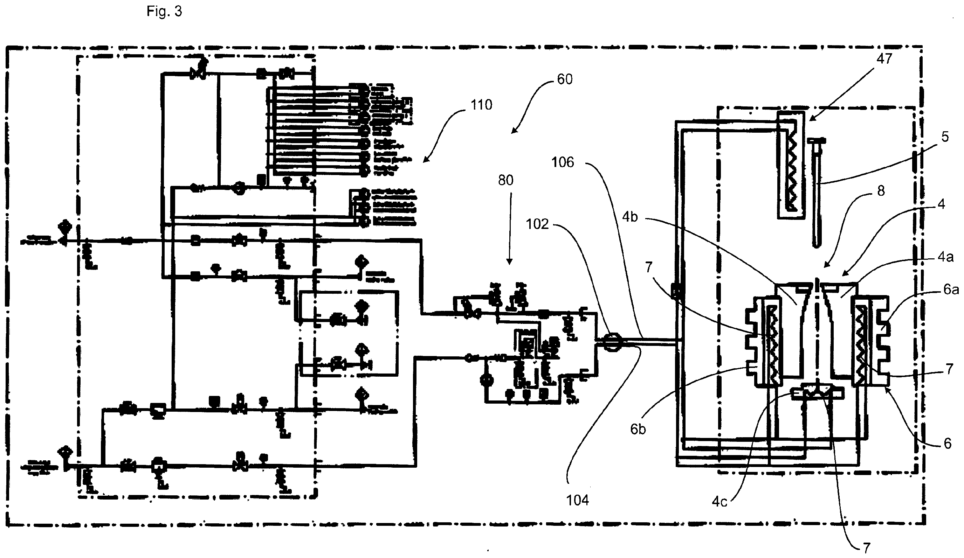

Figur 3 zeigt eine schematische Darstellung einer erfindungsgemäßen Vorrichtung. Dabei ist wieder die Umformungsstation 8 gezeigt, welche hier eine Blasformeinrichtung 4 aufweist. Diese Blasformeinrichtung setzt sich aus zwei Seitenteilen 4a und 4b sowie einem Bodenteil 4c zusammen. Diese drei Elemente bilden zusammen den Hohlraum aus, innerhalb dessen die Kunststoffvorformlinge zu den Kunststoffbehältnissen expandiert werden. Die Blasformeinrichtung ist bevorzugt zumindest teilweise innerhalb eines Reinraums angeordnet.

Das Bezugszeichen 8 kennzeichnet in seiner Gesamtheit eine Blasformträgereinrichtung. Diese weist ebenfalls zwei Blasformträgerteile 6a und 6b auf, die bezüglich einer vertikalen Schwenkachse schwenkbar sind, um die Blasformeinrichtung zu öffnen und zu schließen. Damit ist die Schwenkachse der beiden Blasformträgereinrichtungen parallel zu einer Drehachse X des in Figur 1 gezeigten Trägers. Man erkennt, dass sowohl die beiden Seitenteile 6a und 6b als auch das Bodenteil 4c der Blasformeinrichtung temperiert sind. Zu diesem Zweck verlaufen durch diese Elemente jeweils Kühlmittelleitungen bzw. Kühlmittelkanäle 7. Diese Kühlmittelkanäle werden damit zur Vorbereitung eines Sterilisationsprozesses von dem nunmehr erwärmten Medium durchströmt.

Das Bezugszeichen 60 kennzeichnet in seiner Gesamtheit den Kühlkreislauf, der zur Kühlung der Teile der Umformungsstationen dient. In diesen Kühlkreislauf ist, wie unten genauer beschrieben, das Heizelement bzw. die Heizeinrichtung integriert. Dabei ist es weiterhin möglich, dass bei einer Zuschaltung des Heizelements auch weitere Strömungswege der Kühlflüssigkeit geändert werden, beispielsweise durch Ventile. Auf diese Weise kann beispielsweise die warme Flüssigkeit von bestimmten Bereichen des Kühlkreislaufs ferngehalten werden, etwa von einem Reservoir für die Kühlflüssigkeit

Das Bezugszeichen 110 bezieht sich auf eine nicht genauer dargestellte Versorgungseinheit zum Zuführen eines Kühlmittels. Das Bezugszeichen 102 kennzeichnet einen Drehverteiler, der das Kühlmittel auf die oben genannten Elemente verteilt. Hierfür ist eine Zuführleitung 104 vorgesehen sowie auch eine Rückleitung 106. Das Bezugszeichen 80 kennzeichnet in seiner Gesamtheit eine Erwärmungseinrichtung bzw. das Heizelement, welche zu- und abschaltbar ist, um das Kühlmittel zu erwärmen. Ausgehend von dieser Erwärmungseinrichtung 80 wird das Kühlmittel über den besagten Drehverteiler 102 auf die einzelnen Umformungsstationen 8 aufgeteilt.

Das Bezugszeichen 47 kennzeichnet eine Kühleinrichtung, mit der ein weiterer Bereich der Vorrichtung, etwa der Antrieb der Reckstange 5 gekühlt werden kann.

Ausgehend von der Zuführleitung 104 wird im Arbeitsbetrieb das Kühlmittel auf die besagten Elemente aufgeteilt. Falls nun ein Sterilisationsbetrieb durchgeführt wird, wird das Heiz- bzw. Erwärmungselement 80 zugeschaltet und auf diese Weise das im Arbeitsbetrieb verwendete Kühlmittel stark erwärmt. Auf diese Weise können die Blasformträgerteile 6a und 6b so stark erwärmt werden, dass im Anschluss das hierauf gelangende Sterilisationsmedium nicht mehr kondensiert.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Transportrad
- 4: Blasform
- 4a, 4b: Blasformteile
- 4c: Boden
- 5: Reckstange
- 6: Blasformträger
- 6a, 6b: Blasformträgerteile
- 7: Kühlmittelkanal
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: Faltenbalg
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 47: Kühleinrichtung
- 50: Anlage zum Herstellen von Kunststoffbehältnissen
- 55: Sterilisationseinrichtung
- 60: Kühlkreislauf
- 80: Heizeinrichtung, Heizelement
- 102: Drehverteiler
- 104: Zuführleitung
- 106: Rückleitung
- 110: Versorgungseinheit
- U: unsterile Umgebung
- X: Drehachse des Trägers
- Y: Zustellrichtung der Reckstange
- L: Reinraumgrenze

## Patentansprüche

1. Vorrichtung (1) zum Umformen von Kunststoffvorformlingen (10) zu Kunststoffbehältnissen (10a), mit wenigstens einer Umformungsstation (8), welche eine Blasformeinrichtung (4) aufweist, welche einen Hohlraum ausbildet, innerhalb dessen die Kunststoffvorformlinge (10) durch Beaufschlagung mit einem gasförmigen Medium zu den Kunststoffbehältnissen (10a) umformbar sind, wobei die Blasformeinrichtung (4) mehrteilig ausgebildet ist und wenigstens ein erstes Blasformteil (4a) und ein zweites Blasformteil (4b) aufweist, und wobei die Umformungsstation (8) eine Blasformträgereinrichtung (6) zum Haltern der Blasformteile (4a, 4b) aufweist, wobei die Blasformträgereinrichtung (6) ein erstes Trägerteil (6a) und ein zweites Trägerteil (6b) aufweist, welche bezüglich einander zum Öffnen und Schließen der Blasformeinrichtung (4) beweglich sind, und wobei wenigstens ein Kühlmittelkanal (7) vorgesehen ist, der zum Leiten eines fließfähigen Kühlmittels zum Kühlen der Blasformeinrichtung (4) und/oder der Blasformträgereinrichtung (6) dient wobei dieser Kühlmittelkanal (7) in einen Kühlkreislauf (60) eingebunden ist, wobei die Vorrichtung (1) einen Reinraum (20) aufweist, innerhalb dessen die Kunststoffvorformlinge (10) zu den Kunststoffbehältnissen (10a) expandierbar sind
**dadurch gekennzeichnet, dass**
der Kühlkreislauf (60) wenigstens ein während eines Sterilisationsbetriebs zuschaltbares Heizelement (80) zum Erwärmen des fließfähigen Kühlmittels aufweist und das wenigstens eine Heizelement (80) in den Kühlkreislauf (60) integriert ist und in einer Strömungsrichtung des fließfähigen Kühlmittels stromaufwärts einer Verteileinrichtung angeordnet ist, welche das Kühlmittel auf die einzelnen Umformungsstationen verteilt.

2. Vorrichtung (1) nach Anspruch 1,
**dadurch gekennzeichnet, dass**
die Vorrichtung (1) einen drehbaren Träger (2) aufweist, an dem eine Vielzahl von Umformungsstationen (8) angeordnet ist.

3. Vorrichtung (1) nach Anspruch 2,
**dadurch gekennzeichnet, dass**
das wenigstens eine Heizelement (80) stationär angeordnet ist.

4. Vorrichtung (1) nach wenigstens einem der vorangegangenen Ansprüche,
**dadurch gekennzeichnet, dass**
mehrere Heizelemente (80) vorgesehen sind.

5. Vorrichtung (1) nach Anspruch 4,
**dadurch gekennzeichnet, dass**
jeder Umformungsstation (8) wenigstens ein Heizelement (80) zugeordnet ist.

6. Vorrichtung (1) nach wenigstens einem der vorangegangenen Ansprüche,
**dadurch gekennzeichnet, dass**
das wenigstens eine Heizelement (80) eine elektrisch betriebenes Heizelement (80) ist.

7. Vorrichtung (1) nach wenigstens einem der vorangegangenen Ansprüche,
**dadurch gekennzeichnet, dass**
das wenigstens eine Heizelement (80) in einer Störmungsrichtung des Kühlmittels in Serie mit dem Kühlmittelkanal angeordnet ist.

8. Vorrichtung (1) nach wenigstens einem der vorangegangenen Ansprüche,
**dadurch gekennzeichnet, dass**
die Vorrichtung (1) wenigstens eine Beaufschlagungseinrichtung (55) aufweist, um wenigstens einen Bereich der wenigstens einen Umformungsstation (8) mit einem fließfähigen Sterilisationsmedium zu beaufschlagen.

9. Verfahren zum Umformen von Kunststoffvorformlingen (10) zu Kunststoffbehältnissen (10a), wobei die Kunststoffvorformlinge (10) mittels einer Vielzahl von Umformungsstationen (8) entlang eines vorgegebenen Transportpfads transportiert und während dieses Transports durch Beaufschlagung mit einem fließfähigen Medium zu den Kunststoffbehältnissen (10a) expandiert werden, wobei die Umformungsstationen (8) jeweils Blasformeinrichtungen (4) aufweisen und diese Blasformeinrichtungen (4) durch Verwendung eines Kühlmediums während eines Arbeitsbetriebs der Vorrichtung gekühlt werden,
**dadurch gekennzeichnet, dass**
dieses Kühlmedium wenigstens zeitweise während eines Sterilisationsbetriebs mittels einer zuschaltbaren Heizeinrichtung (80) erwärmt wird und das wenigstens eine Heizelement in den Kühlkreislauf integriert ist und in einer Strömungsrichtung des fließfähigen Kühlmittels stromaufwärts einer Verteileinrichtung angeordnet ist, welche das Kühlmittel auf die einzelnen Umformungsstationen verteilt.

10. Verfahren nach Anspruch 9,
**dadurch gekennzeichnet, dass**
nach der Erwärmung des Kühlmediums wenigstens ein Element wenigstens einer Umformungsstation (8) mit einem Sterilisationsmedium beaufschlagt wird.

## Claims

1. An apparatus (1) for the shaping of plastics material pre-forms (10) into plastics material containers (10a), with at least one shaping station (8) which has a blow moulding device (4) which forms a cavity, inside which the plastics material pre-forms (10) are capable of being shaped into the plastics material containers (10a) by being acted upon with a gaseous medium, wherein the blow moulding device (4) is constructed in several parts and has at least one first blow mould part (4a) and one second blow mould part (4b), and wherein the shaping station (8) has a blow mould carrier device (6) for holding the blow mould parts (4a, 4b), wherein the blow mould carrier device (6) has a first carrier part (6a) and a second carrier part (6b) which are movable with respect to each other in order to open and close the blow moulding device (4), and wherein at least one coolant channel (7) is provided which is used for conveying a flowable coolant for cooling the blow moulding device (4) and/or the blow mould carrier device (6), wherein this coolant channel (7) is integrated in a cooling circuit (60), wherein the apparatus (1) has a clean room (20) inside which the plastics material pre-forms (10) are capable of being expanded to form the plastics material containers (10a),
**characterized in that**
the cooling circuit (60) has at least one heating element (80) capable of being switched on for heating the flowable coolant and the at least one heating element (80) is integrated in the cooling circuit (60) and is arranged upstream of a distribution device, which distributes the coolant to several shaping stations in a flow direction of the flowable coolant.

2. An apparatus (1) according to claim 1,
**characterized in that**
the apparatus (1) has a rotatable carrier (2) on which a plurality of shaping stations (8) are arranged.

3. An apparatus (1) according to claim 2,
**characterized in that**
the at least one heating element (80) is arranged stationary.

4. An apparatus (1) according to at least one of the preceding claims,
**characterized in that**
several heating elements (80) are provided.

5. An apparatus (1) according to claim 4,
**characterized in that**
each shaping station (8) has associated with it at least one heating element (80).

6. An apparatus (1) according to at least one of the preceding claims,
**characterized in that**
the at least one heating element (80) is an electrically operated heating element (80).

7. An apparatus (1) according to at least one of the preceding claims,
**characterized in that**
the at least one heating element (80) is arranged in series with the coolant channel in a flow direction of the coolant.

8. An apparatus (1) according to at least one of the preceding claims,
**characterized in that**
the apparatus (1) has at least one stressing device (55) in order to act upon at least one area of the at least one shaping station (8) with a flowable sterilization medium.

9. A method of shaping plastics material pre-forms (10) into plastics material containers (10a), wherein the plastics material pre-forms (10) are conveyed along a pre-set conveying path by means of a plurality of shaping stations (8) and are expanded during this conveying to form the plastics material containers (10a) by being acted upon with a flowable medium, wherein the shaping stations (8) have in each case blow moulding devices (4) and these blow moulding devices (4) are cooled by the use of a cooling medium during a working operation of the apparatus,
**characterized in that**
this cooling medium is heated at least for a time by means of a heating device (80) which is capable of being switched on and the at least one heating element (80) is integrated in the cooling circuit (60) and is arranged upstream of a distribution device, which distributes the coolant to several shaping stations, in a flow direction of the flowable coolant.

10. A method according to claim 9,
**characterized in that**
after the heating of the cooling medium at least one element of at least one shaping station (8) is acted upon with a sterilization medium.

## Revendications

1. Dispositif (1) servant à mettre en forme des préformes en plastique (10) en des récipients en plastique (10a), comprenant au moins un poste de mise en forme (8), qui présente un système de moulage par soufflage (4), qui forme une cavité, à l'intérieur de laquelle les préformes en plastique (10) peuvent être mises en forme en des récipients en plastique (10a) sous l'effet de l'action exercée par un milieu gazeux, dans lequel le système de moulage par soufflage (4) est réalisé en plusieurs parties et présente au moins une première partie de moulage par soufflage (4a) et une deuxième partie de moulage par soufflage (4b), et dans lequel le poste de mise en forme (8) présente un système de support de moule par soufflage (6) servant à maintenir les parties de moulage par soufflage (4a, 4b), dans lequel le système de support de moule par soufflage (6) présente une première partie de support (6a) et une deuxième partie de support (6b), qui sont mobiles l'une par rapport à l'autre afin d'ouvrir et de fermer le système de moule par soufflage (4), et dans lequel au moins un canal d'agent de refroidissement (7) est prévu, lequel sert à acheminer un agent de refroidissement pouvant s'écouler servant à refroidir le système de moule par soufflage (4) et/ou le système de support de moule par soufflage (6), dans lequel ledit canal d'agent de refroidissement (7) est intégré dans un circuit de refroidissement (60), dans lequel le dispositif (1) présente une salle blanche (20), à l'intérieur de laquelle les préformes en plastique (10) peuvent être expansées en les récipients en plastique (10a),
**caractérisé en ce que**
le circuit de refroidissement (60) présente au moins un élément de chauffage (80) pouvant être activé au cours d'un mode de stérilisation, servant à réchauffer l'agent de refroidissement pouvant s'écouler, et l'au moins un élément de chauffage (80) est intégré dans le circuit de refroidissement (60) et est disposé en amont d'un système de répartition dans une direction d'écoulement de l'agent de refroidissement pouvant s'écouler, lequel système de répartition répartit l'agent de refroidissement sur les divers postes de mise en forme.

2. Dispositif (1) selon la revendication 1,
**caractérisé en ce que**
le dispositif (1) présente un support (2) rotatif, au niveau duquel est disposée une pluralité de postes de mise en forme (8).

3. Dispositif (1) selon la revendication 2,
**caractérisé en ce que**
l'au moins un élément de chauffage (80) est disposé de manière stationnaire.

4. Dispositif (1) selon au moins l'une quelconque des revendications précédentes,
**caractérisé en ce que**
plusieurs éléments de chauffage (80) sont prévus.

5. Dispositif (1) selon la revendication 4,
**caractérisé en ce que**
au moins un élément de chauffage (80) est associé à chaque poste de mise en forme (8).

6. Dispositif (1) selon au moins l'une quelconque des revendications précédentes,
**caractérisé en ce que**
l'au moins un élément de chauffage (80) est un élément de chauffage (80) à fonctionnement électrique.

7. Dispositif (1) selon au moins l'une quelconque des revendications précédentes,
**caractérisé en ce que**
l'au moins un élément de chauffage (80) est disposé en série avec le canal d'agent de refroidissement dans une direction d'écoulement de l'agent de refroidissement.

8. Dispositif (1) selon au moins l'une quelconque des revendications précédentes,
**caractérisé en ce que**
le dispositif (1) présente au moins un système de sollicitation (55) afin de soumettre au moins une zone de l'au moins un poste de mise en forme (8) à l'action d'un milieu de stérilisation pouvant s'écouler.

9. Procédé servant à mettre en forme des préformes en plastique (10) en des récipients en plastique (10a), dans lequel les préformes en plastique (10) sont transportées au moyen d'une pluralité de postes de mise en forme (8) le long d'un chemin de transport spécifié et sont expansées en des récipients en plastique (10a) au cours dudit transport sous l'action d'un milieu pouvant s'écouler, dans lequel les postes de mise en forme (8) présentent respectivement des systèmes de moule par soufflage (4) et lesdits systèmes de moule par soufflage (4) sont refroidis en utilisant un milieu de refroidissement au cours d'un mode de fonctionnement du dispositif,
**caractérisé en ce que**
ledit milieu de refroidissement est réchauffé au moins en partie au cours d'un mode de stérilisation au moyen d'un système de chauffage (80) pouvant être activé et l'au moins un élément de chauffage est intégré dans le circuit de refroidissement et est disposé, dans une direction d'écoulement de l'agent de refroidissement pouvant s'écouler, en amont d'un système de répartition, qui répartit l'agent de refroidissement sur les divers postes de mise en forme.

10. Procédé selon la revendication 9,
**caractérisé en ce que**
au moins un élément d'au moins un poste de mise en forme (8) est soumis à l'action d'un milieu de stérilisation après le réchauffement du milieu de refroidissement.
